# EUROPÄISCHE PATENTSCHRIFT

(11) **EP 1 437 238 B1**
(45) Veröffentlichungstag und Bekanntmachung des Hinweises auf die Patenterteilung: **21.02.2007**
(21) Anmeldenummer: 03104430.8
(22) Anmeldetag: 27.11.2003
(51) Int. Cl.: B60C 11/12

(54) **Fahrzeugluftreifen insbesondere zum Einsatz unter winterlichen Bedingungen**
Pneumatic tire particularly for use under winter conditions
Bandage pneumatique notamment pour utilisation dans des conditions hivernales

(30) Priorität: 13.01.2003 DE 10301012
(43) Veröffentlichungstag der Anmeldung: 14.07.2004
(73) Patentinhaber: Continental AG, 30001 Hannover (DE)
(72) Erfinder: Schlittenhard, Jan, 30900, Wedemark (DE)

(56) Entgegenhaltungen:
- EP-A- 0 779 164
- DE-A- 3 540 669

## Beschreibung

Die Erfindung betrifft einen Fahrzeugluftreifen zum Einsatz unter winterlichen Fahrbedingungen gemäß dem Oberbegriff des Patentanspruchs 1.

Gattungsgemäße Fahrzeugluftreifen, nämlich Winterreifen, sind beispielsweise aus der DE 196 35 147 A1 und der US 6,250,354 B1 bekannt. Üblicherweise weisen derartige Winterreifen Umfangsrillen, Schrägrillen und/oder Querrillen auf, welche eine Vielzahl von Profilblöcken trennen, welche bei moderneren Konzeptionen schräg zur Umfangsrichtung des Reifen und schräg zueinander verlaufen bzw. angeordnet sind, so dass das Laufstreifenprofil insgesamt pfeilartig untergliedert ist. Die Profilblockelemente innerhalb der Laufstreifenmitte, wie auch die Profilblöcke im Schulterbereich des Reifens weisen Feineinschnitte auf, welche fälschlicherweise als Lamellen bezeichnet werden. Diese Feineinschnitte weisen in der US 6,250,354 in Aufsicht auf das Laufstreifenprofil einen symmetrischen zickzackförmigen Verlauf auf. Bekannt sind ebenfalls wellenförmige oder gerade Verläufe. Im Radialschnitt können die Feineinschnitte gerade, schräg oder dreidimensional sein. Verlaufen die Feineinschnitte wellenförmig, so ist die Wellenlinie zumeist sinusförmig mit konstanter Amplitude und Wellenlänge, auch wenn bereits in der DE 35 40 669 A1 Feineinschnitte beschrieben wurden, deren Amplitude zur Mitte eines Profilblocks hin zunimmt, während in der DE 35 40 668 C2 Feineinschnitte vorgeschlagen wurden, deren Wellenlänge im Zentrum des Profilblocks kleiner ist als an seinen Kanten. In der US 5 873 399 A sind symmetrische Feineinschnitte beschrieben, die im randlichen Bereich eine kleine Wellenlänge mit kleiner Amplitude aufweisen, während diese im mittigen Bereich eine große Wellenlänge mit großer Amplitude aufweisen.

Durch die Feineinschnitte entstehen beim Betrieb des Reifens eine Vielzahl von sich öffnenden und wieder schließenden Kanten und Spalten, welche sich beim Fahren auf Schnee und Eis in die derart ausgebildete Fahrbahnoberfläche einkrallen und ein sicheres Fahrverhalten unter winterlichen Bedingungen ermöglichen sollen.

Die von zwei Feineinschnitten eingeschlossenen Profilblockelemente weisen Kanten auf, welche sich in Schnee und Eis einkrallen und hierdurch die Wintertauglichkeit des Reifens ermöglichen. Zwischen zwei Feineinschnitten liegt die Haupt- oder Biegeachse des Profilblockelements, wobei bei Feineinschnitten mit sinusartigem Wellenzug die Biegeachse in der Mitte des Profilblockelements liegt. Diese Biegeachse ist insbesondere beim Einrollen eines Profilblockelements in den Latsch wichtig für den Grad der Öffnung der Feineinschnitte und für das Entstehen des sogenannten Kanteneffekts. Eine symmetrische Ausgestaltung der Feineinschnitte und der Biegeachse ist insofern vorteilhaft, als hierdurch auch eine Symmetrie in beide Drehrichtungen des Reifens ermöglicht wird, was insbesondere für Reifen wünschenswert ist, die nicht drehsinngebunden sind, bei denen also bei der Montage am Fahrzeug nicht auf einen vorgeschriebenen Drehsinn geachtet werden muß. Aber eine symmetrische Ausgestaltung der Feineinschnitte bewirkt ebenfalls, dass sich beim Bremsen und beim Beschleunigen gleichartige Kanten ausbilden, die den unterschiedlichen Erfordernissen beim Bremsen und Beschleunigen nur bedingt gerecht werden.

Profilblöcke mit Feineinschnitten haben sich seit langem insbesondere für Winterreifen bewährt. Dennoch können bisherige Lösungen nicht in allen Punkten befriedigen. Insbesondere in Bezug auf das Traktions- und Bremsvermögen von Winterreifen ist noch Raum für Verbesserungen. Bislang versuchte man, den Kanteneffekt und die Anzahl wirksamer Kanten der Profilblockelemente durch Erhöhung der Anzahl der Feineinschnitte, Ausbildung von produktionstechnisch aufwendigen dreidimensionalen Strukturen an den vertikalen Kanten der Profilblockelemente und andere Maßnahmen zu erhöhen.

Entsprechend ist Aufgabe vorliegender Erfindung die Verbesserung von bekannten Winterreifen hinsichtlich der Wintereigenschaften und des Vermögens des Übertragens von Traktions- und Bremskräften, sowie der Verbesserung der Ausgestaltung wirksamer Kanten der Profilblockelemente.

Diese Aufgabe wird erfindungsgemäß mit einem Reifen gelöst, welcher die Merkmale des Patentanspruchs 1 aufweist.

Bei der Ausgestaltung eines Fahrzeugluftreifens gemäß Patentanspruch 1 wird die Aufgabe also dadurch gelöst, dass wenigstens zwei Feineinschnitte jeweils eine Wellenform aufweisen, welche an einer Stelle in einer Halbwelle eine stark überhöhte Amplitude aufweist, wobei die Halbwellen mit stark überhöhter Amplitude der Feineinschnitte miteinander fluchten.

Mit dieser Lösung entfernt sich der Erfinder bewußt von herkömmlichen Ansätzen, nach denen versucht wurde, den Wellenzug der Feineinschnitte möglichst konstant und symmetrisch zu halten. Der Erfinder hat nämlich herausgefunden, dass sich die Wintereigenschaften mit seiner Lösung deutlich verbessern lassen, weil hierdurch die Lage der Haupt- und Biegeachse in einem Profilblockelement zu einer Feineinschnittkante hin verlegt wird, wodurch die Steifigkeit und das Biegeverhalten des Profilblockelements positiv verändert und optimiert werden. Hierdurch entsteht ein drehrichtungsabhängiges Laufstreifenprofil, wodurch sich weitere positive Gestaltungsmöglichkeiten ergeben.

Da zwei gleich ausgebildete Feineinschnitte miteinander fluchten, d.h., da die Halbwellen mit stark überhöhter Amplitude auf gleicher Linie senkrecht zur Hauptachse des jeweiligen Feineinschnitts liegen, entsteht in diesem Bereich eine Verzahnung zweier Profilblockelemente, welche stärker ist als in den Bereichen außerhalb der genannten Halbwelle. Diese Verzahnung bewirkt eine stärkere Verzahnung der Profilblockelemente untereinander, wodurch größere Kräfte längs der Hauptachse übertragen werden können. Hierdurch wird das Lenkansprechen und die Fahrstabilität verbessert.

Weitere Vorteile und Ausgestaltungen der Erfindung, welche Gegenstand der weiteren Patentansprüche sind, werden im Folgenden anhand von Ausführungsbeispielen in der Beschreibung und in der Zeichnung näher dargestellt. In der Zeichnung ist
- Fig. 1: die Aufsicht auf ein Ausführungsbeispiel eines Laufstreifenprofils eines erfindungsgemäßen Fahrzeugluftreifens,
- Fig. 2: eine Prinzipskizze eines einzelnen Profilblocks gemäß der Erfindung,
- Fig. 3: eine Prinzipskizze eines Profilblocks nach dem Stand der Technik,
- Fig. 4 a - c: der Profilblock aus Fig. 2 von der Seite, und
- Fig. 5 a, b: Elemente eines erfindungsgemäßen Profilblocks im Betrieb in dreidimensionaler Ansicht

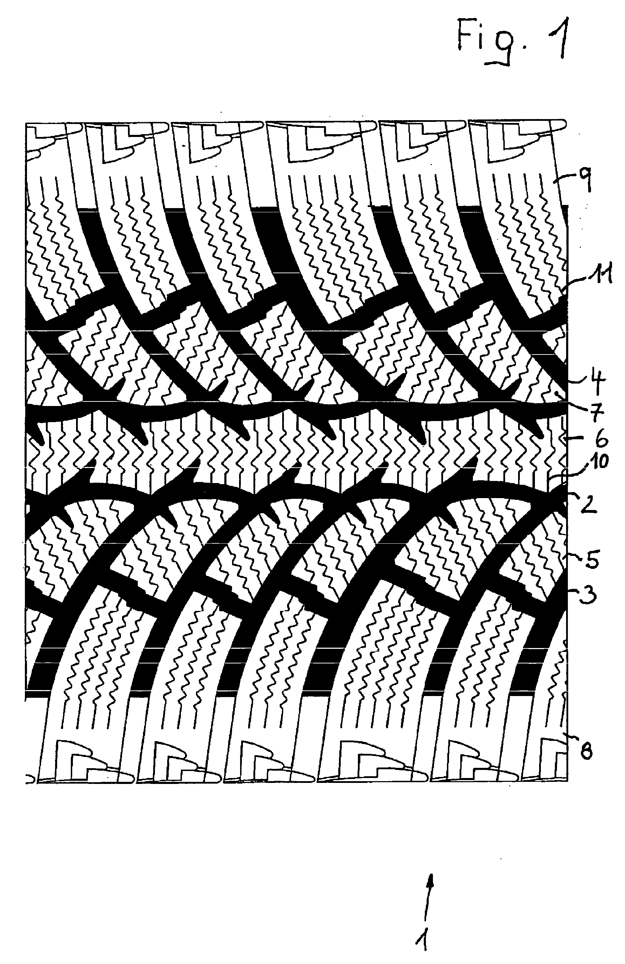

In Figur 1 ist ein erstes Ausführungsbeispiel eines Laufstreifenprofils 1 eines Winterreifens in maßstabsgetreuer Darstellung gezeigt. Der Laufstreifen 1 weist Längsrillen 2 und eine Reihe von Schrägrillen 3, 4 auf, durch welche der Laufstreifen in eine Reihe von Profilblöcken 5 bis 7 und in axial außenseitig angeordnete Schulterblockreihen 8 und 9 unterteilt ist. Die Profilblöcke 5 bis 7 und die Schulterblockreihen 8 und 9 weisen Feineinschnitte 10,11 auf, wobei Feineinschnitte 11 der Profilblöcke 5, 7 sowie der Schulterblockreihen 8, 9 einen sinuswellenförmigen Verlauf entsprechend dem bekannten Stand der Technik aufweisen, während Feineinschnitte 10 des Profilblocks 6 einen von der Sinuskurve abweichenden Verlauf gemäß der Erfindung aufweisen.

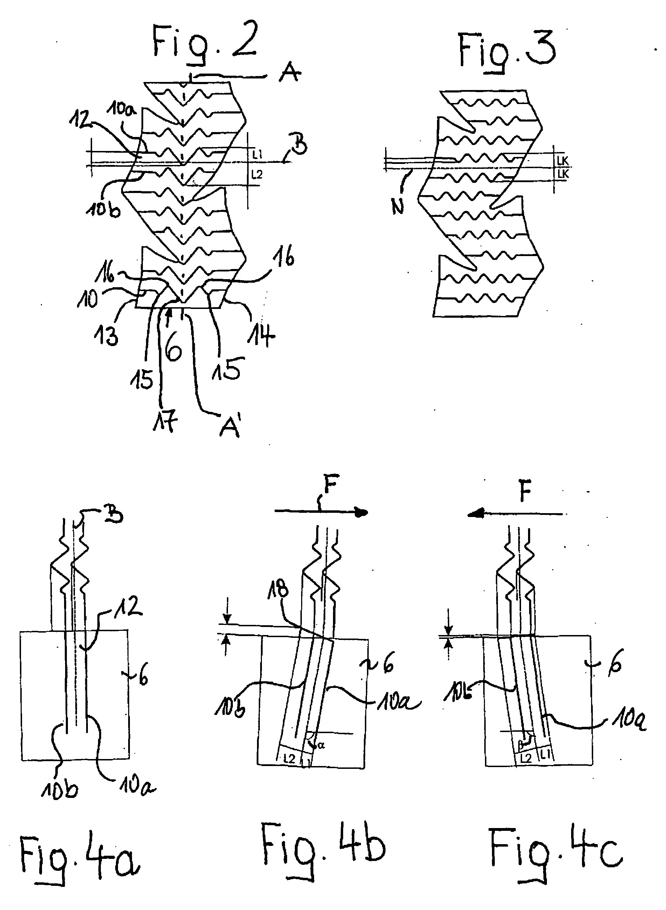

Der prinzipielle Aufbau des Profilblocks 6 gemäß der Erfindung ist in den Figuren 2, 4 bis 5 näher dargestellt, während Figur 3 zum besseren Verständnis den normalen Aufbau gemäß dem Stand der Technik darstellt.

In Figur 2 ist ein Ausschnitt eines Profilblocks 6 aus Fig. 1 dargestellt. Der dort schematisch dargestellte Profilblock 6 weist mehrere Feineinschnitte 10 auf. Die Feineinschnitte 10 unterteilen den Profilblock 6 in Profilblockelemente 12. Die Feineinschnitte 10 des Profilblock 6 weisen im Gegensatz zu den herkömmlichen sinusförmigen Feineinschnitte des in Fig. 3 dargestellten Profilblocks gemäß dem Stand der Technik jeweils einen im Bereich von Außenkanten 13, 14 des Profilblocks 6 beginnenden bzw. endenden Abschnitt mit normalen, sinusartigen Halbwellen 15, 16 mit Normalamplitude auf, während sich etwa in der Mitte des Profilblocks 6 entlang einer nur angedeuteten Längsachse A - A' eine Halbwelle 17 mit stark überhöhter Amplitude befindet. Diese Halbwellen bilden durch ihre Flucht zur Achse A - A' ein "V" und eine an dieser Stelle besondere Verzahnung. Durch die Halbwelle 17 verschiebt sich eine Haupt- oder Biegeachse B von der in Fig. 3 dargestellten Normalachse N zur Kante 18 eines Profilblockelements 12.

Mit L1 ist in Fig. 2 die Länge zwischen Amplitudenmaximum des Feineinschnitts 10a und der Biegeachse B, und mit L2 die Länge zwischen Amplitudenminimum des Feineinschnitts 10b und der Biegeachse B bezeichnet, wobei für das Verhältnis L1 : L2 gilt: L1 < L2. Mit LK in Fig. 3 ist die konventionelle Länge bezeichnet; diese gibt das symmetrische Längenverhältnis zwischen maximaler und minimaler Amplitude zur Normalachse N wieder. Für das Verhältnis von L2 zu LK gilt: L2 > LK.

In den Fig. 4 a - c ist der Profilblock 6 in schematischer Seitenansicht in verschiedenen Betriebszuständen dargestellt. Fig. 4a zeigt den Profilblock im unbelasteten Zustand; Fig. 4b zeigt ihn bei Traktion auf Schnee. Der Pfeil F deutet die Richtung der einwirkenden Kräfte an; das "V" der Halbwelle 17 deutet mit seiner Spitze zur Fahrtrichtung. Durch Verschiebung der Biegeachse B stellt sich die Kante 18 hoch und kann so besonders tief in den Schnee eingreifen. Der Winkel α wird durch das Verhältnis L1 < L2 besonders groß. Es stellt sich ein starker Kanteneffekt ein, da das Element 12 durch die Verschiebung der Biegeachse B weich ist.

In Fig. 4 c ist der Profilblock 6 beim Bremsen auf Eis dargestellt, also mit entgegen gesetzter Kraftrichtung F. Hier nun wird auch das Verhältnis L1 : L2 umgekehrt, es gilt beim Bremsen L1 > L2. Die Steifigkeit des Profilblockelements 12 wird aufgrund des größeren Hebels L2 ebenfalls größer; der Winkel β wird kleiner, es findet eine geringere Elementverformung statt. Hierdurch entsteht ein geringerer Kanteneffekt, es bildet sich eine steife Wischkante aus, worunter verstanden wird, dass diese Kante ähnlich einem Scheibenwischerblatt das Oberflächenwasser auf dem Eis wegwischt und hierdurch eine Gummi-Eis-Reibung ermöglicht.

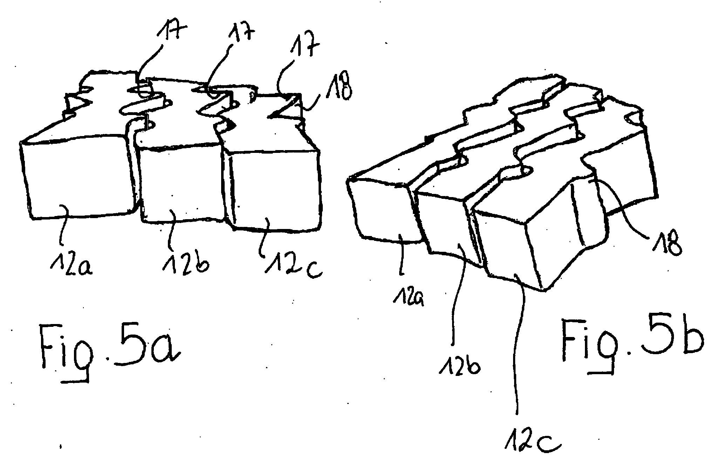

In den Fig. 5 a und 5 b ist die Situation aus Fig. 4a anhand einer vergrößerten, nicht maßstabgerechten dreidimensionalen Simulation dreier Profilblockelemnte 12 a -c wieder gegeben. Zu erkennen ist dort insbesondere, dass die Kanten 18 im Bereich der Halbwelle 17 beim Einlauf in den Latsch hoch gehoben werden und sich tief in Schnee einkrallen können.

### Bezugszeichenliste

### (Teil der Beschreibung)

- 1: Laufstreifen
- 2: Längsrille
- 3: Schrägrille
- 4: Schrägrille
- 5: Profilblock
- 6: Profilblock
- 7: Profilblock
- 8: Schulterblockreihe
- 9: Schulterblockreihe
- 10: Feineinschnitt
- 11: Feineinschnitt
- 12: Profilblockelement
- 13: Außenkante
- 14: Außenkante
- 15: Halbwelle
- 16: Halbwelle
- 17: Halbwelle
- 18: Elementkante

- A-A': Längsachse
- B: Biegeachse
- N: Normalachse
- F: Kraftrichtung

## Patentansprüche

1. Fahrzeugluftreifen insbesondere zum Einsatz unter winterlichen Fahrbedingungen, mit einem Laufstreifenprofil (1), welches durch Längsrillen (2) und Schrägrillen (3, 4) in von einander getrennte Profilblöcke (5 - 9) untergliedert ist, wobei die Profilblöcke (5 - 9) im Wesentlichen parallel zueinander angeordnete Feineinschnitte (10, 10a, 10b, 11) in Wellenform aufweisen, welche einen Profilblock in Profilblockelemente (12) unterteilen, **dadurch gekennzeichnet, dass** wenigstens zwei Feineinschnitte (10; 10a, 10b) jeweils eine Wellenform aufweisen, welche an einer Stelle in einer Halbwelle (17) eine stark überhöhte Amplitude aufweist, wobei die Halbwellen (17) mit stark überhöhter Amplitude der Feineinschnitte (10;10a, 10b) miteinander fluchten.

2. Fahrzeugluftreifen nach Anspruch 1, **dadurch gekennzeichnet, dass** das Amplitudenverhältnis der Amplitude der normalen Halbwellen (15, 16) zur Amplitude der Halbwelle (17) mit überhöhter Amplitude zwischen 1 : 2 und 1 : 5 beträgt.

3. Fahrzeugluftreifen nach einem der vorangegangenen Ansprüche, **dadurch gekennzeichnet, dass** sich die Halbwelle (17) mit stark überhöhter Amplitude im Mittenbereich (A - A') eines Profilblocks (5-9) befindet.

4. Fahrzeugluftreifen nach einem der vorangegangenen Ansprüche, **dadurch gekennzeichnet, dass** sich die Halbwelle (17) mit stark überhöhter Amplitude im Kantenbereich (13, 14) eines Profilblocks (5-9) befindet.

5. Fahrzeugluftreifen nach einem der vorangegangenen Ansprüche, **dadurch gekennzeichnet, dass** die Breite der Feineinschnitte (10, 11) 0,1 mm bis 5 mm, insbesondere 0,3 - 0,8 mm beträgt.

6. Fahrzeugluftreifen nach einem der vorangegangenen Ansprüche, **dadurch gekennzeichnet, dass** die Breite der Profilblockelemente (12) 2 mm bis 50 mm, insbesondere 3-10 mm beträgt.

7. Fahrzeugluftreifen nach einem der vorangegangenen Ansprüche, **dadurch gekennzeichnet, dass** die Feineinschnitte (10, 11) jeweils im Winkel zu den Profilblockkanten (13, 14) angeordnet sind und diese schneiden.

8. Fahrzeugluftreifen nach einem der vorangegangenen Ansprüche, **dadurch gekennzeichnet, dass** der Laufstreifen (1) drehrichtungsgebunden ist, wobei das Wellental der Halbwelle (17) mit stark überhöhter Amplitude in Fahrtrichtung ausgerichtet ist.

9. Fahrzeugluftreifen nach einem der vorangegangenen Ansprüche, **dadurch gekennzeichnet, dass** in einem Feinschnitt (10; 10a; 10b) das Verhältnis der Anzahl von normalen Halbwellen (15, 16) zur Anzahl von Halbwellen (17) mit überhöhter Amplitude zwischen 2 : 1 und 20 : 1 beträgt.

10. Fahrzeugluftreifen nach einem der Ansprüche 1-9, **dadurch gekennzeichnet, dass** ausschließlich der mittig über den Reifenumfang umlaufende Profilblock (6) wenigstens zwei Feineinschnitte (10; 10a, 10b) mit jeweils einer Wellenform aufweist, welche an einer Stelle in einer Halbwelle (17) eine stark überhöhte Amplitude aufweist, wobei die Halbwellen (17) der Feineinschnitte (10; 10a, 10b) mit stark überhöhter Amplitude miteinander fluchten.

## Claims

1. Pneumatic vehicle tyre, in particular for use under winter driving conditions, with a tread strip profile (1), which is subdivided by longitudinal grooves (2) and angled grooves (3, 4) into separate profile blocks (5 - 9), the profile blocks (5 - 9) having sipes (10, 10a, 10b, 11) arranged substantially parallel to one another in wave form, which subdivide a profile block into profile block elements (12), **characterized in that** at least two sipes (10; 10a, 10b) respectively have a wave form which has a sharply increased amplitude at one point in a semi-wave (17), the semi-waves (17) with sharply increased amplitude of the sipes (10; 10a, 10b) being in line with one another.

2. Pneumatic vehicle tyre according to Claim 1, **characterized in that** the amplitude ratio of the amplitude of the normal half-waves (15, 16) to the amplitude of the half-wave (17) with increased amplitude is between 1 : 2 and 1 : 5.

3. Pneumatic vehicle tyre according to one of the preceding claims, **characterized in that** the half wave (17) with sharply increased amplitude is in the central region (A - A') of a profile block (5-9).

4. Pneumatic vehicle tyre according to one of the preceding claims, **characterized in that** the half wave (17) with sharply increased amplitude is in the edge region (13, 14) of a profile block (5-9).

5. Pneumatic vehicle tyre according to one of the preceding claims, **characterized in that** the width of the sipes (10, 11) is 0.1 mm to 5 mm, in particular 0.3 - 0.8 mm.

6. Pneumatic vehicle tyre according to one of the preceding claims, **characterized in that** the width of the profile block elements (12) is 2 mm to 50 mm, in particular 3 - 10 mm.

7. Pneumatic vehicle tyre according to one of the preceding claims, **characterized in that** the sipes (10, 11) are respectively arranged at an angle to the profile block edges (13, 14) and intersect them.

8. Pneumatic vehicle tyre according to one of the preceding claims, **characterized in that** the tread strip (1) is dependent on the direction of rotation, the wave trough of the half-wave (17) with sharply increased amplitude being aligned in the direction of travel.

9. Pneumatic vehicle tyre according to one of the preceding claims, **characterized in that** in a sipe (10; 10a; 10b) the ratio of the number of normal half-waves (15, 16) to the number of half-waves (17) with increased amplitude is between 2 : 1 and 20 : 1.

10. Pneumatic vehicle tyre according to one of Claims 1-9, **characterized in that** only the profile block (6) running centrally around the circumference of the tyre has at least two sipes (10; 10a, 10b) with in each case a wave form which has a sharply increased amplitude at one point in a semi-wave (17), the half-waves (17) of the sipes (10; 10a, 10b) with sharply increased amplitude being in line with one another.

## Revendications

1. Bandage pneumatique pour véhicule, en particulier destiné à être utilisé en conditions hivernales, qui présente un profil (1) de bande de roulement divisé en blocs profilés (5 - 9) séparés les uns des autres par des rainures longitudinales (2) et des rainures obliques (3, 4), les blocs profilés (5 - 9) présentant de fines entailles (10, 10a, 10b, 11) de forme ondulée qui sont disposées essentiellement en parallèle les unes aux autres et qui divisent un bloc profilé en éléments (12) de bloc profilé, **caractérisé en ce qu'**au moins deux fines entailles (10; 10a, 10b) ont une forme ondulée qui présente une amplitude nettement plus accusée en un emplacement d'une demi-ondulation (17), les demi-ondulations (17) où les fines entailles (10; 10a, 10b) ont une amplitude fortement accusée étant alignées les unes par rapport aux autres.

2. Bandage pneumatique pour véhicule selon la revendication 1, **caractérisé en ce que** le rapport entre l'amplitude des demi-ondulations (15, 16) normales et l'amplitude des demi-ondulations (17) à amplitude fortement accusée est compris entre 1 : 2 et 1 : 5.

3. Bandage pneumatique pour véhicule selon l'une des revendications précédentes, **caractérisé en ce que** la demi-ondulation (17) dont l'amplitude est fortement accusée est située dans la partie centrale (A - A') d'un bloc profilé (5 - 9).

4. Bandage pneumatique pour véhicule selon l'une des revendications précédentes, **caractérisé en ce que** la demi-ondulation (17) dont l'amplitude est fortement accusée est située dans la bordure (13, 14) d'un bloc profilé (5 - 9).

5. Bandage pneumatique pour véhicule selon l'une des revendications précédentes, **caractérisé en ce que** la largeur des fines entailles (10, 11) est de 0,1 mm à 5 mm et en particulier de 0,3 à 0,8 mm.

6. Bandage pneumatique pour véhicule selon l'une des revendications précédentes, **caractérisé en ce que** la largeur des éléments (12) de bloc profilé est de 2 mm à 50 mm et en particulier de 3 à 10 mm.

7. Bandage pneumatique pour véhicule selon l'une des revendications précédentes, **caractérisé en ce que** les fines entailles (10, 11) sont toutes disposées obliquement par rapport aux bordures (13, 14) des blocs profilés et coupent ces dernières.

8. Bandage pneumatique pour véhicule selon l'une des revendications précédentes, **caractérisé en ce que** la bande de roulement (1) est asymétrique par rapport au sens de rotation, le creux des demi-ondulations (17) dont l'amplitude est fortement accusée étant orienté dans le sens d'avancement.

9. Bandage pneumatique pour véhicule selon l'une des revendications précédentes, **caractérisé en ce que** dans une fine entaille (10; 10a; 10b), le rapport entre le nombre des demi-ondulations normales (15, 16) et le nombre des demi-ondulations (17) dont l'amplitude est fortement accusée est compris entre 2 : 1 et 20 : 1.

10. Bandage pneumatique pour véhicule selon l'une des revendications 1 - 9, **caractérisé en ce que** seul le bloc profilé (6) qui s'étend au milieu de la périphérie du pneu présente au moins deux fines entailles (10; 10a, 10b) qui ont toutes deux une forme ondulée qui présente une amplitude fortement accusée à l'emplacement d'une demi-ondulation (17), les demi-ondulations (17) des fines entailles (10; 10a, 10b) dont l'amplitude est fortement accusée étant alignées les unes sur les autres.
